# FASCICULE DE BREVET EUROPEEN

(11) **EP 1 170 076 B1**
(45) Date de publication et mention de la délivrance du brevet: **20.12.2006**
(21) Numéro de dépôt: 01401787.5
(22) Date de dépôt: 04.07.2001
(51) Int. Cl.: B22F 7/06, F16D 1/04, F16D 3/18

(54) **Procédé de fabrication d'un manchon destiné à accoupler deux arbres cannelés et manchon d'accouplement obtenu par le procédé**
Verfahren zur Herstellung einer Muffe zum Verbinden von kerbverzahnten Wellenzapfen sowie damit hergestellte Verbindungsmuffe
Process for manufacturing a sleeve for the connection of two splined shafts and coupling sleeve prepared thereby

(30) Priorité: 05.07.2000 FR 0008748
(43) Date de publication de la demande: 09.01.2002
(73) Titulaire: Peugeot Citroen Automobiles, 92200 Neuilly Sur Seine (FR)
(72) Inventeur: Davi, Claude, 68210 Hecken (FR)
(74) Mandataire: Timoney, Ian Charles Craig

(56) Documents cités:
- WO-A-94/06589
- FR-A- 895 819
- US-A- 5 895 119

## Description

L'invention se rapporte à un procédé de fabrication d'un manchon destiné à accoupler deux arbres cannelés, ainsi qu'à un manchon d'accouplement obtenu par le procédé.

L'invention concerne notamment les manchons d'accouplement d'arbres de boîtes de vitesses de véhicules automobiles. En particulier, l'invention peut s'appliquer aux manchons prévus pour assurer l'accouplement entre l'arbre de sortie d'un différentiel et un arbre de transmission.

Un tel manchon d'accouplement à la forme générale d'un tube cylindrique et est cannelé sur sa surface intérieure, pour assurer la transmission de couple entre deux arbres cannelés.

Les manchons d'accouplement de l'art antérieur sont réalisés classiquement par décolletage, c'est-à-dire par une opération de tournage d'une pièce métallique brute. La pièce tournée est ensuite traitée thermiquement pour lui conférer des propriétés mécaniques déterminées.

Cependant, la fabrication de ces manchons s'avère complexe et coûteuse en raison notamment des opérations d'usinage.

Un but de la présente invention est de proposer un procédé de fabrication d'un manchon destiné à accoupler deux arbres cannelés, palliant tout ou partie des inconvénients de l'art antérieur relevés ci-dessus.

Ce but est atteint le procédé de fabrication de la revendication 1.

Les tronçons adjacents peuvent être conformés de façon à présenter respectivement des formes conjuguées formant des moyens de butée pour empêcher la rotation relative d'un tronçon par rapport à l'autre.

Un autre but de l'invention est de proposer un manchon d'accouplement obtenu par le procédé conforme à l'une quelconque des caractéristiques précédentes.

Par ailleurs, l'invention peut comporter l'une ou plusieurs des caractéristiques suivantes :
- le manchon est constitué de deux tronçons de forme générale cylindrique, un premier tronçon comportant une première extrémité de diamètre réduit par rapport au reste de son corps, ladite première extrémité étant prévue pour s'engager dans un logement complémentaire formé à une première extrémité de l'autre tronçon,
- le manchon est constitué de trois tronçons de forme générale cylindrique, deux premiers tronçons comportant chacun une première extrémité de diamètre réduit par rapport au reste de leurs corps respectifs, lesdites premières extrémités des deux premiers tronçons étant prévues pour s'engager respectivement dans deux logements complémentaires formés respectivement aux deux extrémités du troisième tronçon,
- le manchon est constitué de trois tronçons, deux premiers tronçons ayant une forme générale cylindrique et étant logés respectivement dans deux trous borgnes formés respectivement aux deux extrémités d'un troisième tronçon central cylindrique,
- les surfaces emboîtées en contact des tronçons (2 à 7) adjacents présentent des formes conjuguées, telles qu'au moins un méplat, pour bloquer la rotation d'un tronçon par rapport à l'autre.

L'invention concerne également un manchon d'accouplement destiné à accoupler l'arbre de sortie d'un mécanisme différentiel d'un véhicule automobile avec un arbre de transmission obtenu par le procédé de fabrication conforme à l'une quelconque des caractéristiques précédentes.

Avantageusement, le manchon comporte une collerette au niveau de l'une de ses extrémités, la collerette s'étendant autour de la périphérie du manchon et étant prévue pour assurer le maintien d'un joint d'étanchéité disposé au niveau de la sortie du différentiel lorsque le manchon est en position montée, la collerette étant réalisée d'une pièce avec le manchon lors de la fabrication de ce dernier.

Selon une autre particularité, la collerette est réalisée en matériau plastique surmoulé ou clipé sur une extrémité du manchon.

D'autres particularités et avantages apparaîtront à la lecture de la description ci-après, faite en référence aux figures dans lesquelles :
- la figure 1 représente une vue partielle et en coupe longitudinale d'un différentiel de véhicule automobile, illustrant la disposition d'un manchon d'accouplement d'un arbre de sortie de différentiel avec un arbre de transmission selon l'art antérieur,
- la figure 2 représente une vue agrandie d'un détail de la figure 1, illustrant le manchon d'accouplement selon l'art antérieur,
- la figure 3 représente une vue en coupe longitudinale d'un manchon d'accouplement conforme à un premier mode préféré de réalisation de l'invention,
- la figure 4 représente une vue en coupe transversale du manchon de la figure 1, selon la ligne AA,
- la figure 5 représente une vue en coupe longitudinale d'un manchon d'accouplement conforme à un second mode de réalisation de l'invention,
- la figure 6 représente une vue en coupe longitudinale d'un manchon d'accouplement conforme à un troisième mode de réalisation de l'invention,
- la figure 7 représente une vue en coupe longitudinale d'un manchon d'accouplement conforme à un quatrième mode de réalisation de l'invention.

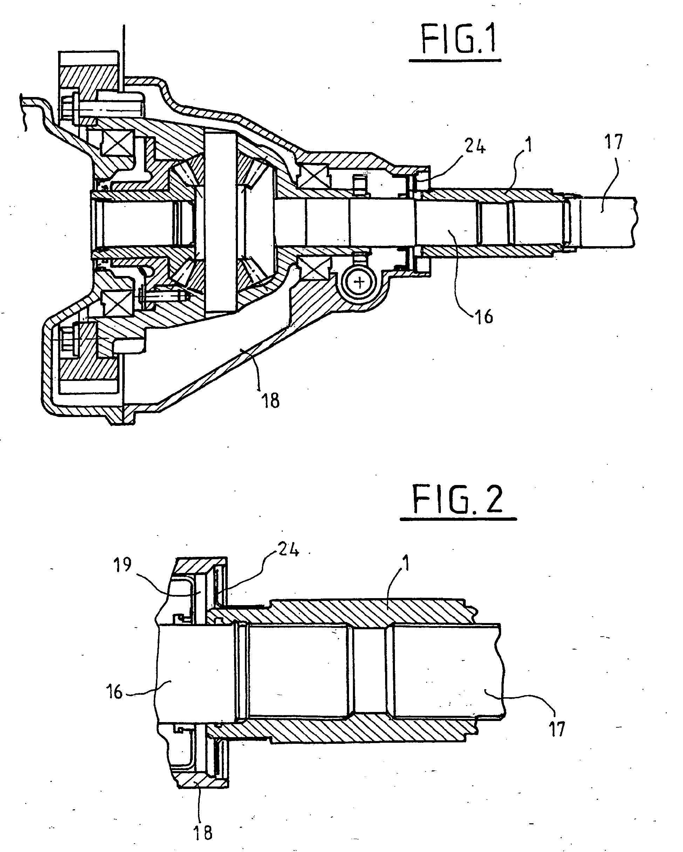

La figure 1 représente une vue partielle et en coupe longitudinale d'un mécanisme 18 différentiel de véhicule automobile de type connu. L'arbre de sortie 16 du différentiel est accouplé à un arbre 17 de transmission au moyen d'un manchon 1 conforme à l'art antérieur.

Classiquement, un déflecteur 24 constitué d'une bague en tôle 24 est monté au niveau d'une extrémité du manchon 1, pour assurer le maintien d'un joint d'étanchéité 19 torique disposé autour de l'arbre 16, à la sortie du différentiel 18 (figure 2).

Le manchon 1 selon l'art antérieur est constitué d'un tube cylindrique métallique obtenu par décolletage. La surface intérieure du manchon 1 est usinée de façon à présenter des cannelures complémentaires de celles des arbres 16, 17 à accoupler.

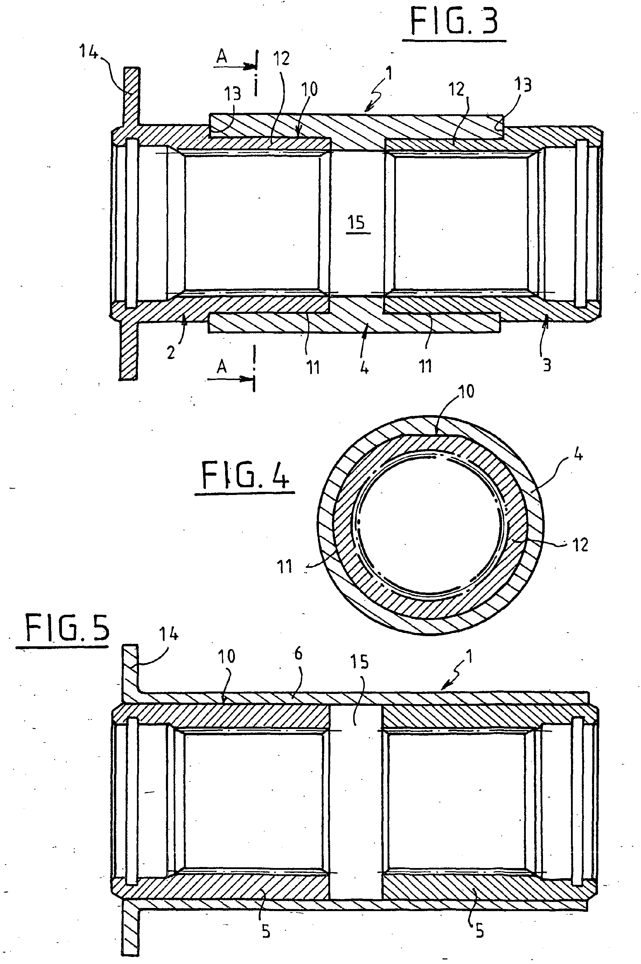

L'invention va à présent être décrite en référence aux figures 3 à 7.

Selon l'invention, le manchon 1 d'accouplement est réalisé par la technique connue de la métallurgie des poudres, c'est-à-dire par une opération de compression d'une poudre métallique suivie d'une opération de chauffage. C'est à dire que le manchon 1 est obtenu par le compactage d'une poudre métallique dans une presse. Le comprimé obtenu est ensuite chauffé de façon à lier les particules de poudre sous l'effet des phénomènes de diffusion.

Un traitement thermique supplémentaire du manchon 1 peut éventuellement être réalisé. Par exemple, une cémentation ou un refroidissement rapide contrôlé peut être réalisé sur le manchon 1 pour lui conférer une meilleure résistance mécanique.

Le procédé de fabrication du manchon 1 selon l'invention est plus économique que les procédés connus, en raison notamment de la suppression des opérations d'usinage. En effet, la métallurgie des poudres permet d'obtenir des manchons cannelés avec une précision dimensionnelle suffisante pour s'affranchir d'un usinage.

Le manchon 1 est réalisé à partir d'au moins deux tronçons formés chacun par technique de la métallurgie des poudres. Les tronçons sont ensuite assemblés par des moyens de liaison mécanique.

Les figures 3 et 4 illustrent un manchon selon un mode de réalisation préféré de l'invention. Le manchon 1 est constitué de trois tronçons 2, 3, 4 formés par technique de la métallurgie des poudres puis assemblés.

Deux premiers tronçons 2, 3 ont chacun la forme générale d'un tube cylindrique. Chaque premier tronçon 2, 3 comporte une première extrémité 12 de diamètre réduit par rapport au reste de son corps cylindrique et définissant un épaulement 13 circulaire sur la périphérie du tronçon 2, 3.

Les premières extrémités 12 des deux premiers tronçons 2, 3 sont prévues pour s'engager respectivement dans les deux extrémités du troisième tronçon central 4. Le tronçon central 4 a la forme générale d'un tube cylindrique dont le volume intérieur est obturé en son milieu par une paroi 15 définissant deux ouvertures borgnes de part et d'autre du tronçon 4. C'est à dire que la section longitudinale du tronçon central 4 a la forme générale d'un H.

Selon l'invention la solidarisation des tronçons 2, 3, 4 est obtenue par un serrage des deux premiers tronçons 2, 3 dans le tronçon central 4. Par exemple, le serrage est réalisé par frettage, c'est à dire que l'on refroidit les deux premiers tronçons 2, 3, ou/et on chauffe le tronçon 4 central pour permettre leur emboîtement.

En variante le serrage des tronçons 2, 3, 4 peut être réalisé par cofrittage. C'est à dire que les deux premiers tronçons 2, 3 sont réalisés dans un matériau métallique ayant un coefficient de retrait différent du matériau du matériau constituant le tronçon central 4. L'emboîtement des tronçons 2, 3, 4 est réalisé à chaud et le serrage se produit lors du refroidissement de ces derniers.

De préférence, les surfaces 11 emboîtées en contact des tronçons 2, 3, 4 adjacents présentent des formes conjuguées 10 prévues pour empêcher la rotation d'un tronçon par rapport à l'autre. Comme représenté à la figure 4, les deux premiers tronçons 2, 3 peuvent comporter chacun un méplat 10 sur leur périphérie extérieure destiné à coopérer avec un méplat complémentaire formé sur la surface interne du tronçon 4 central.

Bien entendu les différents tronçons 2, 3, 4 peuvent comporter plusieurs méplats ou tout autre forme appropriée assurant leur blocage en rotation.

Par ailleurs, l'un 2 des tronçons peut comporter une collerette 14 au niveau de l'un de ses extrémités. La collerette 14 s'étend radialement autour de la périphérie du tronçon 2, de façon à former un rebord circulaire et sensiblement perpendiculaire la surface extérieure du tronçon 2.

La collerette 14 est réalisée d'une pièce avec le tronçon 2, lors de la fabrication (métallurgie des poudres) de ce dernier.

La collerette 14 forme un déflecteur dimensionné pour assurer le maintien d'un joint 19 d'étanchéité disposé au niveau de la sortie du différentiel 18 lorsque le manchon 1 est en position montée (cf. figure 1).

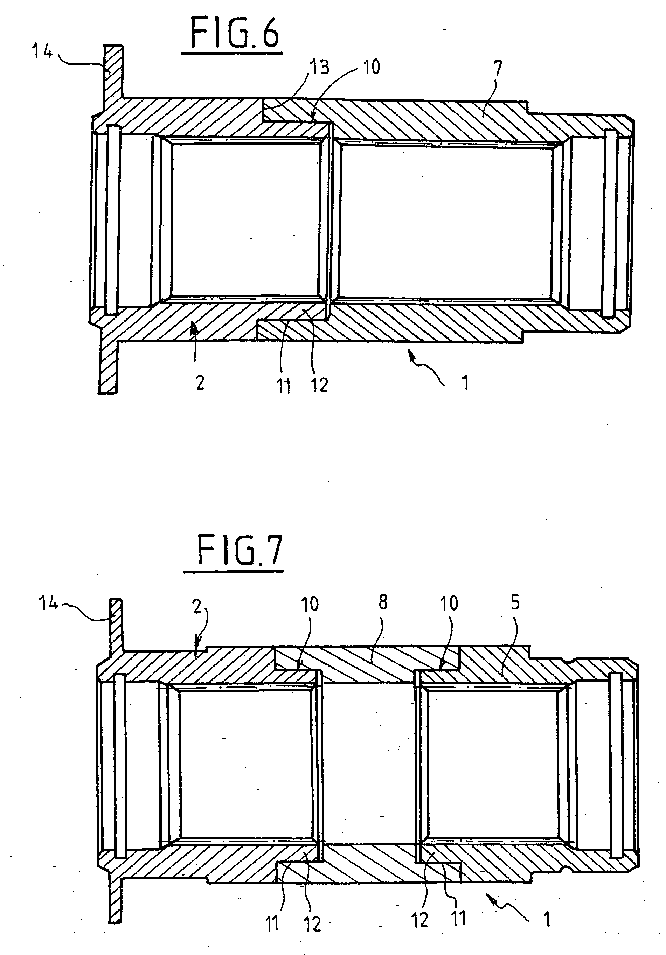

La figure 5 illustre une variante de réalisation du manchon 1 selon l'invention. Comme précédemment, le manchon 1 est constitué de trois tronçons 5, 6 assemblés. Deux premiers tronçons 5 sont disposées dans deux logements borgnes formés aux deux extrémités d'un tronçon 6 central de section en forme de H. Le manchon 1 de la figure 5 diffère de celui de la figure 3 par le fait que les deux premiers tronçons 5 ont une surface extérieure cylindrique et sont emmanchés à l'intérieur du tronçon central 6. C'est à dire que la paroi extérieure du tronçon 6 central forme un tube cylindrique qui recouvre entièrement les deux premiers tronçons 5. Le serrage des deux premiers tronçons 5 dans le tronçon central 6 peut être réalisé de la même façon que décrit précédemment (frettage, cofrittrage, collage, soudage).

De plus, comme précédemment, les tronçons adjacents 5, 6 présentent de préférence des formes conjuguées sur leurs surfaces emboîtées, telles qu'au moins un méplat, pour empêcher la rotation d'un tronçon par rapport à l'autre.

Le manchon 1 illustré à la figure 5 comporte également une collerette 14 formant déflecteur. Le déflecteur 14 est formé d'une pièce avec le tronçon 6 central. Plus précisément, le déflecteur 14 est formé par l'une des extrémités du tronçon 6 central qui s'étend sensiblement à 90 degrés vers l'extérieur de ce dernier.

La figure 6 illustre une autre variante de réalisation du manchon 1 selon l'invention constitué de deux tronçons 2, 7 assemblés.

Un premier tronçon 2 comporte une première extrémité 12 de diamètre réduit par rapport au reste de son corps et définissant un épaulement 13 circulaire. Comme précédemment, la première extrémité 12 est prévue pour s'engager dans un logement complémentaire formé à une première extrémité de l'autre tronçon 7. La seconde extrémité du premier 2 tronçon est pourvu comme précédemment d'un déflecteur 14.

La figure 7 illustre encore une autre variante de réalisation de l'invention selon laquelle le manchon 1 est formé de trois tronçons 2, 8, 5. Deux premiers tronçons 2, 5 ont chacun la forme générale d'un tube cylindrique. Chaque premier tronçon 2, 5 comporte une première extrémité 12 de diamètre réduit par rapport au reste de son corps cylindrique et définissant un épaulement 13 circulaire.

Les premières extrémités 12 des deux premiers tronçons 2, 5 sont prévues pour s'engager respectivement dans les deux extrémités du troisième tronçon central 8. Le tronçon central 8 a la forme générale d'un tube cylindrique. Un déflecteur 14 est également formé d'une pièce avec le premier tronçon 2.

L'assemblage des tronçons des modes de réalisation des figures 6 et 7 peut être réalisé de la même façon que décrit précédemment en référence aux figures 3 et 4 (frettage, cofrittrage). De plus, comme précédemment les tronçons adjacents peuvent présenter comporter des formes conjuguées, telles qu'au moins un méplat 10, pour bloquer la rotation d'un tronçon par rapport à l'autre.

En variante, le déflecteur 14 peut être réalisé en matériau plastique moulé et qui est clipé ou surmoulé sur une extrémité d'un tronçon métallique. Par exemple, le déflecteur peut être moulé d'une pièce avec un tronçon plastique de faible longueur qui sera clipé ou surmoulé sur le tronçon réalisé par la technique de la métallurgie des poudres.

On conçoit donc aisément que le manchon d'accouplement selon l'invention est obtenu par un procédé simple et économique.

En particulier, l'invention permet de réaliser à faible coût une gamme de manchons pour une grande diversité d'arbres ayant des diamètres et/ou nombres de cannelures différents. En effet, des tronçons adaptés à des types d'arbres différents peuvent être facilement assemblés les uns aux autres en fonction des applications. De plus, l'intégration du déflecteur au manchon lors de la fabrication de ce dernier permet de réduire le nombre de pièces constituant le dispositif d'accouplement.

Par ailleurs, et de façon surprenante, en dépit du fait que le manchon est formé par l'assemblage de plusieurs tronçons élémentaires réalisés par la technique de la métallurgie des poudres, celui-ci présente une structure ayant une solidité suffisante pour assurer une transmission de couple important entre des arbres cannelés.

De plus, de fabrication par la technique la métallurgie des poudres permet d'adapter les différentes parties du manchon aux sollicitations endurées. Ainsi, dans le cas d'un manchon constitué de trois tronçons, les tronçons cannelés formant les extrémités du manchon 1 peuvent être réalisés dans un matériau plus résistant que le tronçon central non cannelé.

Bien entendu, l'invention ne saurait se limiter aux manchons destinés à accoupler un arbre de sortie de différentiel avec un arbre de transmission. Ainsi, l'invention peut s'appliquer à tout autre type de manchon d'accouplement, comme par exemple ceux accouplant des arbres de liaison, des barres anti-dévers ou des arbres de boîtes de vitesses.

## Revendications

1. Procédé de fabrication d'un manchon (1) destiné à accoupler deux arbres (16, 17) cannelés, **caractérisé en ce qu'**il consiste à réaliser le manchon (1) à partir d'au moins deux tronçons (2 à 7) formés chacun par technique de la métallurgie des poudres, c'est-à-dire par une opération de compression d'une poudre métallique pour obtenir un comprimé, suivie d'une opération de chauffage de ce comprimé, et à assembler les tronçons par des moyens de liaison mécanique comportant une opération de serrage d'au moins l'un des tronçons (2,3,5) dans le tronçon adjacent (4,6,7,8) réalisée par frettage ou par cofrittage des tronçons (2 à 7) emboîtés.

2. Procédé de fabrication selon la revendication 1, **caractérisé en ce que** les tronçons (2 à 7) adjacents sont conformés de façon à présenter respectivement des formes conjuguées (10) formant des moyens de butée pour empêcher la rotation relative d'un tronçon (2 à 7) par rapport à l'autre.

3. Manchon d'accouplement **caractérisé en ce qu'**il est obtenu par le procédé de fabrication conforme à l'une quelconque des revendications précédentes.

4. Manchon d'accouplement selon la revendication 3 constitué de deux tronçons (2, 7) de forme générale cylindrique, un premier tronçon (2) comportant une première extrémité (12) de diamètre réduit par rapport au reste de son corps, ladite première extrémité (12) étant prévue pour s'engager dans un logement complémentaire formé à une première extrémité de l'autre tronçon (7).

5. Manchon d'accouplement selon la revendication 3 constitué de trois tronçons (2, 7) de forme générale cylindrique, deux premiers tronçons (2, 5) comportant chacun une première extrémité (12) de diamètre réduit par rapport au reste de leurs corps respectifs, lesdites premières extrémités (12) des deux premiers tronçons (2, 5) étant prévues pour s'engager respectivement dans deux logements complémentaires formés respectivement aux deux extrémités du troisième tronçon (7).

6. Manchon d'accouplement selon la revendication 3 constitué de trois tronçons (2 à 6), deux premiers tronçons (2, 5) ayant une forme générale cylindrique et étant logés respectivement dans deux trous borgnes formés respectivement aux deux extrémités d'un troisième tronçon central (4, 6) cylindrique.

7. Manchon d'accouplement selon l'une quelconque des revendications 4 à 6, **caractérisé en ce que** les surfaces emboîtées en contact des tronçons (2 à 7) adjacents présentent des formes conjuguées, telles qu'au moins un méplat (10), pour bloquer la rotation d'un tronçon par rapport à l'autre.

8. Manchon d'accouplement selon l'une quelconque des revendications 3 à 7, destiné à accoupler l'arbre de sortie d'un mécanisme différentiel d'un véhicule automobile avec un arbre de transmission, **caractérisé en ce qu'**il comporte une collerette (14) au niveau de l'une de ses extrémités, la collerette (14) s'étendant autour de la périphérie du manchon (1) et étant prévue pour assurer le maintien d'un joint (19) d'étanchéité disposé au niveau de la sortie du différentiel (18) lorsque le manchon (1) est en position montées, la collerette (14) étant
(i) réalisée d'une pièce avec le manchon (1) lors de la fabrication de ce dernier ou
(ii) réalisée en matériau plastique surmoulé ou clipé sur une extrémité du manchon (1).

## Claims

1. Process for manufacturing a sleeve (1) intended to couple two splined shafts (16, 17), **characterised in that** it consists in forming the sleeve (1) from at least two sections (2 to 7), each formed using powder metallurgy technology, i.e. by an operation of compressing a metal powder to obtain a preform, followed by an operation of heating of this preform, and assembling the sections by means of mechanical connection comprising an operation of clamping at least one of the sections (2, 3, 5) in the adjacent section (4, 6, 7, 8) by sintering or by co-sintering the interlocked sections (2 to 7).

2. Manufacturing process according to Claim 1, **characterised in that** the adjacent sections (2 to 7) are co-formed in such as way as to present combined forms (10) respectively, forming means of abutment to prevent the rotation of one section (2 to 7) relative to the other.

3. Coupling sleeve **characterised in that** it is obtained by the manufacturing process in accordance with any one of the preceding claims.

4. Coupling sleeve according to Claim 3 constituted by two sections (2, 7) of general cylindrical form, the first section (2) comprising a first end (12) of reduced diameter relative to the remainder of its body, said first end (12) being designed to engage in a complementary housing formed at the first end of the other section (7).

5. Coupling sleeve according to Claim 3 constituted by three sections (2, 7) of general cylindrical form, the first two sections (2, 5) each comprising a first end (12) of reduced diameter relative to the remainder of its respective body, said first ends (12) of the first two sections (2, 5) being designed to engage respectively in two complementary housings formed respectively at the two ends of the third section (7).

6. Coupling sleeve according to Claim 3 constituted by three sections (2 to 6), the first two sections (2, 5) having a general cylindrical form and being housed respectively in two blind holes formed respectively at the two ends of a third central cylindrical section (4, 6).

7. Coupling sleeve according to any one of Claims 4 to 6, **characterised in that** the interlocked surfaces in contact with the adjacent sections (2 to 7) have combined forms, such that there is at least one flat section (10) to block the rotation of one section relative to the other.

8. Coupling sleeve according to any one of Claims 3 to 7, intended to couple the transmission output shaft of a differential mechanism of a motor vehicle with a driveshaft, **characterised in that** it comprises a flange (14) at one of its ends, said flange (14) extending around the periphery of the sleeve (1) and being designed to ensure the holding in place of a sealing gasket (19) positioned at the output of the differential (18) when the sleeve (1) is in the assembled position, said flange (14) being:
(i) made in one piece with the sleeve (1) when the latter is manufactured, or
(ii) made of plastic moulded or clipped on to one end of the sleeve (1).

## Patentansprüche

1. Verfahren zur Herstellung einer Muffe (1) zum Verbinden von zwei geriffelten Wellen (16, 17), **dadurch gekennzeichnet, dass** es daraus besteht, die Muffe (1) aus mindestens zwei Teilstücken (2 bis 7) zu bilden, die jeweils in einem pulvermetallurgischen Verfahren hergestellt werden, das heißt durch einen Vorgang der Verdichtung eines metallischen Pulvers, um einen Pressling zu erhalten, auf den ein Vorgang der Erhitzung dieses Presslings folgt, und diese Teilstücke in einem Vorgang des Einpressens mindestens eines der Teilstücke (2, 3, 5) in das angrenzende Teilstück (4, 6, 7, 8) mechanisch zu verbinden, wobei das Einpressen durch Aufschrumpfen oder Sintern der ineinander gesteckten Teilstücke (2 bis 7) erfolgt.

2. Herstellungsverfahren nach Anspruch 1, **dadurch gekennzeichnet, dass** die benachbarten Teilstücke (2 bis 7) so ausgebildet sind, dass sie gleiche Formen (10) aufweisen, die Anschlagmittel bilden, um die relative Drehung eines Teilstücks (2 bis 7) in Bezug auf das andere zu verhindern.

3. Verbindungsmuffe, **dadurch gekennzeichnet, dass** sie mit dem Herstellungsverfahren nach einem der vorhergehenden Ansprüche erhalten wird.

4. Verbindungsmuffe nach Anspruch 3, bestehend aus zwei Teilstücken (2, 7) von der allgemeinen Form eines Zylinders, wobei ein erstes Teilstück (2) ein erstes Ende (12) von kleinerem Durchmesser in Bezug auf seinen restlichen Körper aufweist, das dazu dient, sich in eine komplementäre Aufnahme an einem ersten Ende des anderen Teilstücks (7) einzufügen.

5. Verbindungsmufffe nach Anspruch 3, bestehend aus drei Teilstücken (2, 5, 7) von der allgemeinen Form eines Zylinders, wobei zwei erste Teilstücke (2, 5) jeweils ein erstes Ende (12) von kleinerem Durchmesser in Bezug auf ihren restlichen Körper aufweisen und wobei die ersten Enden (12) der beiden ersten Teilstücke (2, 5) dazu dienen, sich in zwei komplementäre Aufnahmen an den beiden Enden des dritten Teilstücks (7) einzufügen.

6. Verbindungsmuffe nach Anspruch 3, bestehend aus drei Teilstücken (2 bis 6), wobei zwei erste Teilstücke (2, 5) die allgemeine Form eines Zylinders aufweisen und jeweils in zwei Sacklöchern an den beiden Enden eines dritten zylindrischen, mittleren Teilstücks (4, 6) aufgenommen sind.

7. Verbindungsmuffe nach einem der Ansprüche 4 bis 6, **dadurch gekennzeichnet, dass** die ineinander gesteckten, miteinander in Kontakt stehenden Flächen der angrenzenden Teilstücke (2 bis 7) gleiche Formen wie beispielsweise eine Abflachung (10) aufweisen, um die Drehung eines Teilstücks in Bezug auf das andere zu blockieren.

8. Verbindungsmuffe nach einem der Ansprüche 3 bis 7 zum Verbinden der Ausgangswelle eines Differenzialgetriebes eines Kraftfahrzeugs mit einer Antriebswelle, **dadurch gekennzeichnet, dass** sie einen Kragen (14) an einem ihrer Enden aufweist, der sich um den Umfang der Muffe (1) erstreckt und für den Halt einer Dichtung (19) am Ausgang des Differenzials (18) sorgt, wenn sich die Muffe (1) in montierter Position befindet, wobei der Kragen (14) bei der Herstellung der Muffe (1) aus einem Stück mit dieser oder aus Kunststoff hergestellt und an ein Ende der Muffe (1) angeformt oder gesteckt wird.
